Europäisches Patentamt

European Patent Office

Office européen des brevets

(19)

(11) Numéro de publication : **0 504 084 A1**

## (12) DEMANDE DE BREVET EUROPEEN

(21) Numéro de dépôt : **92470010.7**

(22) Date de dépôt : **06.03.92**

(51) Int. Cl.⁵ : **F16K 17/168, F16K 17/04**

(30) Priorité : **14.03.91 FR 9103286**

(43) Date de publication de la demande :
**16.09.92 Bulletin 92/38**

(84) Etats contractants désignés :
**BE CH DE ES FR GB GR IT LI NL PT**

(71) Demandeur : **COMAP**
**46, rue de l'Industrie**
**F-45550 Saint Denis de l'Hôtel (FR)**

(72) Inventeur : **Rager, Pierre**
**59,61 rue Gambetta**
**45530 Vitry aux Loges (FR)**

(74) Mandataire : **Puit, Thierry et al**
**Centre de Recherches de Pont-à-Mousson**
**Service de Propriété Industrielle Boîte Postale**
**109**
**F-54704 Pont-à-Mousson Cédex (FR)**

(54) **Soupape de sûreté à membrane.**

(57)    La soupape à membrane est déposable et est formée par au moins, un disque 1, un porte disque 2, une membrane 3, une tige 8, un écrou de tarage 6 et un bouton de vidange 7.

l'écrou de tarage 6 présente un filetage externe 15 permettant le positionnement de la soupape par vissage. Ledit écrou de tarage 6 se présente sous la forme d'une vis filetée creuse dont la tête de manoeuvre comprend du côté opposé au filetage 15, un prolongement cylindrique 13 d'un diamètre inférieur à la plus courte longueur permettant de rejoindre deux faces opposées de ladite tête, au moins deux bossages 20 dans le prolongement des plus grandes distances diagonales de ladite tête, les bossages 20 étant d'une hauteur plus faible que ledit un prolongement cylindrique 13, le bouton de vidange 7 comprenant autant de rampes hélicoïdales 12 que l'écrou de bossages 20.

La soupape peut être utilisée sur des groupes de sécurité alimentant en eau froide un générateur d'eau chaude sanitaire.

Fig. 1

EP 0 504 084 A1

La présente invention se rapporte à une soupape à membrane. Elle concerne plus particulièrement une soupape de sûreté à membrane pour limiter la pression d'un fluide.

On connaît des soupapes de sûreté à élément de compensation de la pression. Lorsque l'excès de pression du fluide fournit une poussée verticale ascendante dont la valeur est supérieure à la force descendante développée par l'élément de compensation, la soupape s'ouvre, et le fluide s'échappe dans une chambre annulaire, qui entoure l'élément obturateur de la soupape. (voir FR-A-2103729).

L'utilisation de membranes pour des appareils de robinetterie utilisant, notamment des soupapes de sûreté, (voir par exemple le brevet de la demanderesse FR-A-2528932) est particulièrement avantageuse. Dans ces soupapes de sûreté connues la partie supérieure du corps comporte dans l'axe du siège du clapet obturateur, un prolongement cylindrique à l'intérieur duquel est directement prévue une gorge circulaire destinée à recevoir les bords d'une membrane qui se trouve sertie dans la gorge par le rabattement d'une languette annulaire prévue au-dessus d'elle.

Il est connu de limiter à une valeur de consigne maximale la pression dans une enceinte par un dispositif d'assistance pour soupape de sûreté chargé par ressort (voir par exemple le brevet FR-A-2115574).

Ces dispositifs connus présentent des inconvénients. Ils exigent beaucoup de pièces pour leur réalisation.

De plus, les possibilités et l'usure de l'outillage provoquent des imperfections dimensionnelles des pièces.

En fabriquant une série de pièces identiques avec un outillage unique, lesdites pièces identiques seront d'une géométrie légèrement différente.

Ainsi, les dimensions des pièces ne peuvent pas être rigoureusement conformes à leur définition géométrique théorique idéale.

Les variations géométriques dues à ces imperfections sont appelées dispersion ou erreur de forme.

Il existe plusieurs sortes de dispersions.

Une dispersion dimensionnelle des pièces des soupapes connues lors des manipulations (fabrication, démontage, montage, etc). Cette dispersion dimensionnelle englobe l'ensemble des pièces de chaque soupape.

Les autres sortes de dispersions se répartissent entre des dispersions de position et des dispersions d'orientation des différentes pièces de la soupape.

En prenant les pièces d'une soupape au hasard, on constate, après montage, une variation d'intensités de la poussée verticale ascendante entre les différents montages de la soupape ; de plus, la position des différentes pièces (clapet, obturateur, corps, gorge circulaire, ressort, membrane) l'une par rapport à l'autre est modifiée à chaque montage. La dispersion est telle que l'interchangeabilité des pièces ne peut s'effectuer qu'au prix d'une opération de tarage supplémentaire.

Certains dispositifs ne sont pas démontables et même dans le cas où le démontage est possible, ce dernier dérègle les soupapes, en raison des dispersions et nécessite une opération de tarage après le remontage.

En conséquence, il est possible de constater des variations de géométrie dues aux différentes dimensions des pièces qui ne sont jamais de formes et de volumes strictement identiques. Ces écarts dans les dimensions s'ajoutent ou se retranchent les uns des autres ce qui entraîne les dispersions.

L'invention vise à remédier à ces inconvénients. Elle a donc pour objet une soupape à membrane pour circuit de chauffage, par exemple, une soupape de groupe de sécurité alimentant en eau froide un générateur d'eau chaude sanitaire à accumulation.

Cette soupape se caractérise en ce qu'elle constitue un élément modulaire déposable formé par au moins, un disque, un porte disque, une membrane, une tige, un écrou de tarage et un bouton de vidange. Le disque, le porte disque et la membrane sont réalisés en une seule pièce.

La soupape s'incorpore dans un dispositif formant son siège.

La membrane surmoulée sur la tige de la soupape est de forme discoïde.

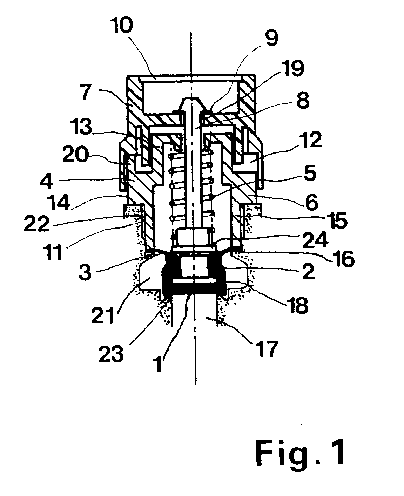

D'autres caractéristiques et avantages de l'invention apparaîtront à la lecture de la description qui va suivre et en regard du dessin annexé qui représente une coupe longitudinale de la soupape selon l'invention.

Comme le représente la figure, l'invention concerne une soupape venant sur son siège formée par un logement dans un corps 11 d'un groupe de sécurité alimentant en eau froide un générateur d'eau chaude sanitaire à accumulation et une cartouche 4 qui comprend un disque 1, un porte-disque 2, une membrane 3, une tige 8, un écrou de tarage 6, un bouton de vidange 7, un ressort 5, un anneau de blocage 9, une rondelle d'identification 10. L'écrou de tarage comprend des rampes hélicoïdales 12 dirigées vers l'extérieur du corps 11 du groupe de sécurité ; lesdites rampes hélicoïdales 12 sont parallèles à un prolongement axial cylindrique 13 de l'écrou 6. L'écrou de tarage 6 comprend six panäs 14 servant de face de manoeuvre. Les rampes hélicoïdales 12 sont dans le prolongement d'une intersection de deux des six pans 14.

L'écrou se prolonge dans le sens du disque 1 par un cylindre creux fileté 15 permettant la fixation de la soupape au corps 11 du groupe de sécurité.

L'écrou de tarage 6 présente sous la forme d'une vis filetée creuse dont la tête de manoeuvre comprend du côté opposé au filetage 22 :

– une tête de manoeuvre présentant six pans 14 destinés à servir de prise au contact d'une clé,

– un prolongement cylindrique 13 d'un diamètre inférieur à la plus courte longueur permettant de rejoindre deux pans opposés 14 de ladite tête,

– au moins deux bossages 20 dans le prolongement des plus grandes distances diagonales de ladite tête, les bossages 20 étant d'une hauteur plus faible que ledit prolongement cylindrique 13.

Le bouton de vidange 7 comprend autant de rampes hélicoïdales 12 que l'écrou de bossages 20.

Chaque rampe hélicoïdale 12 coopère avec un bossage 20.

Le logement dans le corps 11 d'un groupe de sécurité se présente de l'extérieur vers l'intérieur sous la forme d'un perçage taraudé, d'un rétrécissement 16 formant butée suivi d'un élargissement du diamètre formant la chambre 21 qui débouche dans un conduit 17 de plus petit diamètre.

Le raccordement de la chambre 21 avec le conduit 17 est susceptible de former un siège de soupape 23, le disque 1 formant le clapet.

Le disque 1, le porte-disque 2 et la membrane 3 sont réalisés en une seule pièce surmoulée 18. La membrane 3 est plate et susceptible d'osciller de dix degrés environ en suivant le déplacement de la tige 8. La pièce surmoulée 18 est liée de manière rigide à la tige 8 qui traverse l'écrou 6 par un perçage axial 19 que présente ce dernier. La tige 8 présente un épaulement 24 pour recevoir une extrémité du ressort 5 qui appuie par son autre extrémité sur l'écrou de tarage 6. L'anneau de blocage 9 est fixé à l'extrémité de la tige 8 et maintient le bouton de vidange 7. Ledit bouton de vidange 7 est guidé par le prolongement axial cylindrique 13 de l'écrou 6.

La soupape peut s'ouvrir manuellement ce qui permet une vidange du corps 1.

L'ouverture manuelle de la soupape est obtenue par la rotation du bouton de vidange 7. La prolongation de ce mouvement de rotation referme la soupape sur son siège.

Ainsi les déplacements manuels d'ouverture et de fermeture de la soupape sont obtenus par le même mouvement de rotation dans le même sens. Il n'est pas nécessaire de recourir à un sens de manoeuvre différent pour obtenir la fermeture.

Par le mouvement de rotation du bouton de vidange 7, les rampes hélicoïdales 12 repoussent le bouton de vidange 7 qui s'éloigne du corps 11 mais est maintenu en contact avec des bossages 20 par la pression du ressort 5 transmise à l'anneau 9 par l'intermédiaire de la pièce 18 et de la tige 8.

La soupape s'ouvre tout au long de ce déplacement en rotation du bouton de vidange 7, tant que les rampes hélicoïdales 12 restent au contact des bossages 20.

Les bossages 20 ainsi que les rampes hélicoïdales 12 étant respectivement de la même dimension, la prolongation du mouvement de rotation amène chaque rampe hélicoïdale 12 au delà du bossage 20 avec lequel elle était en contact. La pression des bossages 20 disparaît, à ce moment la pression du ressort provoque la fermeture de la soupape.

L'écrou étant vissé dans le logement, il fixe la membrane de manière étanche au rétrécissement 16 formant butée par un serrage. Sous la pression du ressort 5, le disque 1 vient obturer le conduit 17.

La soupape à membrane de groupe de sécurité hydraulique alimentant en eau froide un générateur d'eau chaude sanitaire, comprend au plus trois pièces transmettant la pression du générateur d'eau chaude à l'écrou de tarage 6.

En effet le ressort 5 transmet, en l'amortissant, la pression du fluide provenant du conduit 17 à l'écrou 6. Ladite pression est transmise au ressort 5 uniquement par l'intermédiaire de la pièce 18 et de la tige 8.

La fonction soupape est réalisée sans poste de tarage. Seuls, un ressort de précision 5 et un petit nombre d'éléments, permettent d'assurer le tarage par empilage de ceux-ci.

Contrairement à l'état de la technique antérieur, le tarage ne nécessite pas un poste spécialement créé pour cette opération, ce qui compliquait la fabrication et surtout le remontage.

L'invention permet de supprimer l'opération de sertissage et de transformer la soupape en une soupape cartouche démontable car l'écrou de tarage 6 est vissé dans le logement prévu dans le corps du groupe de sécurité hydraulique 11 pour le positionnement de la soupape.

Cette nouvelle technologie permet d'assurer la fonction soupape par un élément modulaire pouvant s'incorporer dans n'importe quel ensemble.

En variante, la soupape à membrane pour circuit de chauffage générateur d'eau chaude sanitaire, constituant un élément modulaire pouvant s'incorporer dans n'importe quel ensemble et comprenant au moins, un disque 1, un porte disque 2, une membrane 3, est caractérisée en ce qu'elle comprend au moins une caractéristique telle que définie ci-dessus.

La réduction du nombre de ces éléments permet d'avoir un produit plus fiable en terme de qualité des divers éléments, donc un nombre de produits rebutés plus faible.

Le nombre réduit de ces pièces a diminué très fortement la dispersion, de manière qu'à chaque montage ou remontage de la soupape selon l'invention, les différentes pièces retrouvent la même géométrie.

L'oscillation, suivant le déplacement de la tige 8, de la membrane 3 de plus ou moins cinq degrés environ permet d'utiliser une membrane de la forme d'un disque et non une membrane déroulante plus difficile à fabriquer et d'un coût plus élevé.

La membrane 3 de la soupape selon l'invention est surmoulée. Cela procure l'avantage de ne plus avoir à monter des éléments tels que la tige 8, la membrane 3, le disque 1, le porte-disque 2, etc...

Ainsi, grâce au petit nombre de pièces et à la membrane surmoulée qui assurent une fiabilité et une constance de la géométrie, il n'est plus nécessaire de tarer les soupapes après le montage lors de la fabrication. De plus cela permet de les remonter sans effectuer un tarage à la suite d'un démontage.

De plus, cette réduction du nombre de pièces rend la soupape plus fiable surtout quand les pièces sont fabriquées en série.

Au surplus, la soupape selon l'invention peut être réglée pour une pression constante ; par exemple, elle libère la vapeur au-delà de 8,4 bars et pour le chauffage elle limite la pression à 3 bars.

## Revendications

**1.-** Soupape à membrane pour limiter la pression d'un fluide, caractérisée en ce qu'elle est constituée d'une cartouche (4) formée par au moins, un disque (1), un porte-disque (2), une membrane (3), une tige (8), un écrou de tarage (6) et un bouton de vidange (7).

**2.-** Soupape selon la revendication 1, caractérisée en ce que le disque (1), le porte-disque (2) et la membrane (3) sont réalisés en une seule pièce (18).

**3.-** Soupape selon la revendication 1 ou 2, caractérisée en ce que la membrane (3) est de forme discoïde.

**4.-** Soupape selon la revendication 3, caractérisée en ce que la membrane (3) est apte à osciller de plus ou moins cinq degrés.

**5.-** Soupape selon la revendication 1, caractérisée en ce que la membrane (3) est surmoulée sur la tige (8).

**6.-** Soupape de sûreté à membrane de groupe de sécurité hydraulique alimentant en eau froide un générateur d'eau chaude sanitaire, caractérisée en ce qu'elle comprend au plus trois pièces transmettant la pression du générateur d'eau chaude à un écrou de tarage (6).

**7.-** Soupape selon l'une quelconque des revendications 1 à 6, comprenant un écrou de tarage étant vissé dans le logement prévu dans le groupe de sécurité hydraulique pour le positionnement de la soupape, caractérisée en ce que ledit écrou de tarage (6) forme une vis filetée creuse dont la tête de manoeuvre comprend du côté opposé au filetage (22), un prolongement cylindrique (13) d'un diamètre inférieur à la plus courte longueur permettant de rejoindre deux faces opposées de ladite tête, au moins deux bossages (20) dans le prolongement des plus grandes distances diagonales de ladite tête, les bossages (20) étant d'une hauteur plus faible que ledit prolongement cylindrique (13), le bouton de vidange (7) comprenant autant de rampes hélicoïdales (12) que l'écrou de bossages (20).

**8.-** Soupape selon la revendication 7, caractérisée en ce que chaque rampe hélicoïdale (12) coopère avec un bossage (20).

**9.-** Soupape selon l'une quelconque des revendications 1 à 8, caractérisée en ce que la pression du fluide provenant du conduit (17) est transmise au ressort (5) uniquement par l'intermédiaire de la pièce (18) et de la tige (8).

**10.-** Soupape de sûreté à membrane pour circuit de chauffage, constituant un élément modulaire pouvant s'incorporer dans n'importe quel ensemble caractérisée en ce qu'elle comprend au moins un bouton de vidange (7) comprenant au moins une rampe hélicoïdale (12) apte à coulisser sur au moins un bossage (20).

**11.-** Soupape selon la revendication 10 caractérisée en ce qu'elle comprend plusieurs rampes hélicoïdales (12) et plusieurs bossages (20) respectivement de même dimension.

Fig. 1

Office européen
des brevets

**RAPPORT DE RECHERCHE EUROPEENNE**

Numero de la demande

EP 92 47 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-2 203 820 (BRAATHEN)<br><br>* page 1, ligne 11 - ligne 16 *<br>* page 3, ligne 6 - page 4, ligne 29 *<br>* page 5, ligne 2 - ligne 25; figure 1 *<br>--- | 1,2,3,7, 8,9,10, 11 | F16K17/168<br>F16K17/04 |
| A | GB-A-1 159 992 (GULLICK)<br>* page 1, ligne 75 - ligne 90; figure 4 *<br>--- | 1 | |
| A | FR-A-2 498 284 (COPRESI)<br>* page 2, ligne 14 - page 3, ligne 20; figure 1 *<br>-----  | 1,9 | |

**DOMAINES TECHNIQUES RECHERCHES (Int. Cl.5 )**

F16K

Le présent rapport a été établi pour toutes les revendications

| Lieu de la recherche | Date d'achèvement de la recherche | Examinateur |
|---|---|---|
| LA HAYE | 21 MAI 1992 | CHRISTENSEN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)